(19) Europäisches Patentamt
European Patent Office
Office européen des brevets

(11) EP 0 903 366 A1

# (12) DEMANDE DE BREVET EUROPEEN

(43) Date de publication:
**24.03.1999 Bulletin 1999/12**

(51) Int Cl.[6]: **C08G 69/08**, C08G 69/14

(21) Numéro de dépôt: **98402265.7**

(22) Date de dépôt: **14.09.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **18.09.1997 FR 9711647**

(71) Demandeur: **ELF ATOCHEM S.A.**
**92800 Puteaux, Hauts-de-Seine (FR)**

(72) Inventeurs:
- **Blondel, Philippe**
  **27300 Bernay (FR)**
- **Montanari, Thibaut**
  **27300 Bernay (FR)**
- **Briffaud, Thierry**
  **27300 Bernay (FR)**
- **Werth, Michael**
  **27300 Bernay (FR)**
- **Dang, Patrick**
  **27300 Bernay (FR)**

(74) Mandataire: **Kaplan, Jean-Pierre et al**
**ELF ATOCHEM S.A.,**
**Département Propriété Industrielle,**
**4, Cours Michelet,**
**La Défense 10**
**F-92091 Paris Cédex 42 (FR)**

## (54) Copolyamides et compositions de polyamides, procédé de fabrication et applications

(57) Ce copolyamide résultant de la polycondensation d'un mélange de docécanlactame (L12) ou d'acide 12-amino-dodécanoïque (A12) ; et d'acide 11-amino-undécanoïque (A11), est caractérisé par le fait que le monomère L12 ou A12 représente 1 à 15% ou 85 à 99% en poids du mélange, les relations suivantes étant vérifiées pour les points de fusion (PF) en fonction de la composition, les motifs provenant du monomère A12 et L12 étant respectivement majoritaires ou minoritaires :

(1) A12 ou L12 majoritaire :

$$PF\ (°C) \geq 176\text{-}0{,}567 \times (\%\ A11)$$

(2) A12 ou L12 minoritaire:

$$PF\ (°C) \geq 187\text{-}0{,}5 \times (\%\ A12\ ou\ L12),$$

lesdits points de fusion étant déterminés en prenant les pics des signaux des exothermes obtenus en thermoanalyse différentielle avec une vitesse de chauffage de 10°C/minute pour le deuxième passage de chauffe.

De tels copolyamides ont une propriété de résilience à basse température et une propriété de souplesse améliorée, notamment lorsque du plastifiant leur est ajouté. Leur température de transition ductile/fragile est déplacée vers une température plus basse.

EP 0 903 366 A1

## Description

La présente invention concerne les résines thermoplastiques copolyamides, leur fabrication et leurs applications comme résines résistantes au choc à basse température et ayant une bonne flexibilité notamment en présence de plastifiant(s).

Les résines polyamides à base d'homopolymères de l'acide 11-amino-undécanoïque (A11) (ces homopolymères pouvant être désignés aussi par l'abréviation PA11) et celles à base d'homopolymères de l'acide 12-amino-dodécanoïque (A12) ou du dodécanlactame (L12) (ces homopolymères pouvant être désignés aussi par l'abréviation PA12) possèdent de bonnes propriétés, telles que la résistance aux agressions chimiques, la flexibilité, une bonne stabilité dimensionnelle due à une faible reprise d'humidité, une bonne résilience notamment à basse température, et une bonne aptitude à l'extrusion.

Pour les applications précitées, il est actuellement recherché comment améliorer encore la propriété de résilience à basse température et la propriété de souplesse, notamment lorsque du plastifiant est ajouté aux copolyamides, et à déplacer la transition ductile/fragile vers une température plus basse.

La Société déposante a maintenant découvert de façon surprenante que l'on peut atteindre cet objectif en modifiant le PA11 par des motifs provenant de A12 ou L12 et réciproquement, en modifiant le PA12 par des motifs provenant de A11, les compositions en monomères des copolyamides résultants (copolyamides pouvant être désignés par les abréviations respectivement CoPA 11/12 et CoPA12/11) se situant par ailleurs dans des plages bien précises, et lesdits copolyamides présentant des points de fusion se situant dans des plages également bien précises. Par ailleurs, la présente invention offre l'avantage complémentaire que les copolyamides CoPA 11/12 deviennent bien plus transparentes par rapport à la résine homopolymère.

Des copolyamides obtenus par polymérisation d'un mélange de 72 à 82% en poids, de préférence 77% en poids, de L12 ou de A12 et de 28 à 18% en poids, de préférence 23% en poids, de A11, sont décrits dans la demande de brevet français 2130737. Cependant, ces copolyamides de type CoPA 12/11 ne peuvent être utilisés pour les applications présentement visées, car ils sont trop mous, ayant un point de fusion trop bas (160°C dans le cas du CoPA 12/11 de composition 77/23 en poids) et un taux de cristallinité trop bas. Ce taux de cristallinité faible donne une bonne transparence, mais pénalise beaucoup les propriétés thermo-mécaniques et la résistance chimique. Ce document décrit également un copolyamide obtenu à partir de 95% de dodécanlactame (L12) et 5% d'acide 11-amino-undécanoïque (A11) selon son exemple 1. Le point de fusion indiqué est de 171°C.

La demande de brevet japonais JP-A-04 325 159 se rapporte à des CoPA 11/12 ou 12/11 utiles pour la fabrication de poches sanguines ; les compositions pondérales particulières 65/35 et 82/18 illustrent les CoPA respectivement 11/12 et 12/11 le point de fusion est dans les deux cas de 160°C.

La présente invention a donc d'abord pour objet un copolyamide résultant de la polycondensation d'un mélange :

- de dodécanlactame (L12) ou d'acide 12-amino-dodécanoïque (A12) ; et
- d'acide 11-amino-undécanoïque (A11),

caractérisé par le fait que le monomère L12 ou A12 représente 1 à 15% ou 85 à 99% en poids du mélange, les relations suivantes étant vérifiées pour les points de fusion (PF) en fonction de la composition, les motifs provenant du monomère A12 et L12 étant respectivement majoritaires ou minoritaires :

(1) A12 ou L12 majoritaire : PF (°C) $\geq$ 176-0,567 x (% A11)
(2) A12 ou L12 minoritaire : PF (°C) $\geq$ 187-0,5 x (% A12 ou L12)

lesdits points de fusion étant déterminés en prenant les pics des signaux des exothermes obtenus en thermoanalyse différentielle avec une vitesse de chauffage de 10°C/minute pour le deuxième passage de chauffe (cf « Nylon Plastics Handbook » ed M.I. Kohan Hanser Publisher 1995, pages 70 et 140).

En particulier, le point de fusion du copolyamide selon l'invention est compris entre 167,5 et 178°C dans le cas où les motifs provenant du monomère L12 ou A12 sont majoritaires (CoPA 12/11) et entre 179,5 et 190°C dans le cas où les motifs provenant du monomère L12 ou A12 sont minoritaires (CoPA 11/12).

Les masses moléculaires des copolyamides sont exprimées par leurs viscosités inhérentes ($0_{inh}$) dans le métacrésol à 25°C et à une concentration de 0,5 g/dl (pour les définitions des viscosités de solution, on pourra se reporter à « Nylon Plastics Handbook » ed. M.I. Kohan Hanser Publishers 1995, page 80). Les viscosités inhérentes des copolyamides selon l'invention sont comprises entre 1,1 et 2,00, de préférence entre 1,3 et 2,00, avantageusement entre 1,45 et 2,00.

La présente invention a également pour objet une composition de polyamide obtenue par compoundage d'au moins un copolyamide tel que défini ci-dessus avec au moins un additif choisi parmi les plastifiants ; les additifs (ou modifiants) choc ; l'acide phosphorique, phosphoreux ou hydrophosphoreux ou leurs esters ou sels de sodium ou de potassium ou les combinaisons de ces produits, ces dérivés du phosphore jouant le rôle de stabilisants, de catalyseurs et d'additifs pour contrôler la masse moléculaire ; les colorants ; les pigments ; les azurants ; les anti-oxydants ; les stabilisateurs UV ; les limiteurs de chaîne ; et les charges renforçantes ; et/ou avec au moins un autre (co)polymère thermoplastique.

Les plastifiants peuvent être n'importe quels plastifiants connus dans le domaine des polyamides, et sont notamment choisis parmi les dérivés de benzène sulfonamide, tels que le n-butyl benzène sulfonamide (BBSA) («Ucemid A»), l'éthyl toluène sulfonamide (« Santicizer 8 ») ou le N-cyclohexyl toluène sulfonamide (« Santicizer 1H») ; les esters d'acides hydroxy-benzoïques, tels que le parahydroxybenzoate d'éthyl-2 hexyle et le parahydroxybenzoate de décyl-2 hexyle ; les lactames, tels que le caprolactame et la N-méthyl-pyrrolidone ; les esters ou éthers du tétrahydrofurfuryl alcool, comme l'oligoéthylèneoxytétrahydrofurfurylalcool et les esters de l'acide citrique ou de l'acide hydroxymalonique, tels que l'oligoéthylèneoxy malonate. Un plastifiant particulièrement préféré est le n-butyl benzène sulfonamide (BBSA).

La quantité de plastifiant(s) va généralement jusqu'à 15% en poids par rapport au mélange du copolyamide et du (ou des) plastifiant(s).

Dans le cas où l'on ajoute du plastifiant BBSA aux copolyamides selon l'invention, les relations suivantes peuvent être vérifiées pour les points de fusion (PF) en fonction de la composition et la quantité du plastifiant BBSA ajoutée, les motifs provenant du monomère A12 ou L12 étant respectivement majoritaires ou minoritaires :

A12 ou L12 majoritaire: PF(°C) ≥ 176 - 0,567x(%A11) - 0,51x(% BBSA)
A12 ou L12 minoritaire: PF(°C) ≥ 187 - 0,5x(%A12 ou L12) - 0,54x (% BBSA),

ces relations s'appliquant pour des taux de comonomère (respectivement A11 et A12 ou L12) et/ou de BBSA allant jusqu'à 15% en poids par rapport au copolyamide.

Les additifs choc sont, par exemple :

A/ les polyoléfines que l'on peut définir comme polymères comprenant des motifs oléfine, comme, par exemple, des motifs éthylène, propylène, butène-1 ou tout autre alpha oléfine ; à titre d'exemples, on peut citer :

- les polyéthylènes, tels que les LDPE, HDPE, LLDPE ou VLDPE ;
- le polypropylène ;
- les copolymères éthylène/propylène ;
- les PE, en particulier les VLDPE, obtenus avec un métallocène comme catalyseur ;
- les copolymères de l'éthylène avec au moins un produit choisi parmi les sels ou les esters d'acides carboxyliques insaturés, ou les esters vinyliques d'acides carboxyliques insaturés.

On peut citer en particulier le LLDPE, le VLDPE, le polypropylène, les copolymères éthylène/acétate de vinyle et les copolymères éthylène/(méth)acrylate d'alkyle ; la densité de la polyoléfine peut être avantageusement comprise entre 0,86 et 0,965, et son MFI (Melt Flow Index) peut être compris entre 0,3 et 40,

B/ les copolymères séquencés, tels que les copolymères éthylène-propylène caoutchoucs (EPR), les copolymères styrène-b-butadiène-b-styrène (SBS), les copolymères styrène-b-isoprène-b-styrène (SIS), les copolymères éthylène-b-propylène-b-diène (EPDM), les copolymères éthylène-b-propylène-b-butadiène ou isoprène, les copolymères styrène-b-éthylène-butène-b-styrène (SEBS), tels que le copolymère commercialisé sous la dénomination «KRATON » par la Société Shell,

C/ les polyoléfines fonctionnalisées, que l'on peut définir comme polymères comprenant des motifs alpha-oléfine et des motifs époxyde ou acide carboxylique ou anhydride d'acide carboxylique.

A titre d'exemples, on peut citer les polyoléfines A/ et les polymères séquencés B/ greffés par des époxydes insaturés, tels que le (méth)acrylate de glycidyle, et/ou par des acides carboxyliques, tels que l'acide (méth) acrylique, et/ou par des anhydrides d'acides carboxyliques insaturés, tels que l'anhydride maléique.

On peut encore citer :

- les copolymères de l'éthylène, d'un époxyde insaturé et éventuellement d'un ester ou un sel d'acide carboxylique insaturé ou d'un ester vinylique d'acide carboxylique saturé. Ce sont, par exemple, les copolymères éthylène/acétate de vinyle/(méth)acrylate de glycidyle ou les copolymères éthylène/(méth)acrylate d'alkyle/(méth)acrylate de glycidyle ; à titre d'exemples de ces derniers, on peut mentionner ceux commercialisés sous la dénomination « LOTADER » par la Société ELF ATOCHEM ;
- les copolymères de l'éthylène, d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont, par exemple, les copolymères éthylène/acétate de vinyle/anhydride maléique ou les copolymères éthylène/ (méth) acrylate d'alkyle ou d'aryle/ anhydride maléique ou encore les copolymères éthylène/ (méth)acrylate de Zn ou Li/anhydride maléique ;
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans le brevet européen EP 342 066.

Avantageusement, la polyoléfine fonctionnalisée est choisie parmi les copolymères éthylène/acétate de vinyle/anhydride maléique, les copolymères éthylène/ propylène majoritaires en propylène greffés par de l'anhydride maléique puis condensés avec du polyamide 6 monoaminé ou des oligomères monoaminés du caprolactame.
On cite également tout particulièrement les co-ou terpolymères éthylène - (méth)acrylate d'alkyle ou d'aryle - anhydride d'acide dicarboxylique insaturé, comprenant de 77% à 99,2% en moles d'au moins un motif dérivé d'éthylène, de 0 à 20% en moles d'au moins un motif dérivé de (méth)acrylate(s) d'alkyle ou d'aryle et de 0,8 à 3% en moles d'au moins un motif dérivé d'anhydride(s) d'acide dicarboxylique insaturé, et ayant un indice de fluidité compris entre 0,1 et 400 g/10 min. mesuré selon la norme NFT 51-016 (190°C/charge de 2,16 kg) ; les groupements alkyle de l'acrylate ou méthacrylate d'alkyle entrant dans ces terpolymères pouvant être linéaires, ramifiés ou cycliques, et comporter jusqu'à 10 atomes de carbone ; à titre d'exemples de (méth)acrylate d'alkyle entrant dans la composition de ces terpolymères, on peut citer l'acrylate de méthyle, l'acrylate d'éthyle, l'acrylate de n-butyle, l'acrylate d'isobutyle, l'acrylate d'éthyl-2 hexyle, l'acrylate de cyclohexyle, le méthacrylate d'éthyle, et tout particulièrement l'acrylate d'éthyle, l'acrylate de n-butyle et l'acrylate de méthyle ; à titre d'exemples d'anhydrides d'acides dicarboxyliques insaturés entrant dans la définition de ces co- ou terpolymères, on peut citer l'anhydride itaconique, l'anhydride citraconique, l'anhydride méthyl-2 maléique, l'anhydride diméthyl-2,3 maléique, l'anhydride bicyclo[2.2.2]-oct-5-ène 2,3-dicarboxylique, de préférence l'anhydride maléique ; à titre d'exemples préférés de ces terpolymères éthylène- (méth) acrylate d'alkyle-anhydride d'acide dicarboxylique insaturé, on peut citer ceux commercialisés sous la dénomination « LOTADER » par la Société ELF ATOCHEM,
**[0022]** D/ les ionomères, copolymères éthylène/acide (méth)acrylique, tels que celui commercialisé sous la dénomination « SURLYN » par la Société DuPONT.
A titre d'exemples de pigments, on peut citer le dioxyde de titane, le noir de carbone, l'oxyde de cobalt, l'oxyde de fer, le titanate de nickel, les pigments organiques comme les dérivés de phtalocyanine et d'anthraquinone.
Comme exemples d'azurants, on peut citer les dérivés de thiophène.
Les antioxydants sont, par exemple, l'iodure de cuivre combiné avec l'iodure de potassium, les dérivés des phénols encombrés et des amines encombrées.
Comme stabilisateurs UV, on peut mentionner les dérivés de résorcine, les benzotriazoles ou les salicylates.
Comme limiteurs de chaîne, on peut utiliser des acides monocarboxyliques ou dicarboxyliques ou des monoamines ou des diamines aliphatiques.
Des exemples de charges renforçantes sont la wollastonite, les billes de verre, le talc, le mica, le mélange de quartz, mica et chlorite connu sous le nom de « plastorite », le carbonate de calcium et/ou de magnésium, les fibres de verre, les fibres de nitrure de bore, les fibres de carbone.
Les autres (co)polymères thermoplastiques sont, par exemple, les polyoléfines (polyéthylène, polypropylène), les polyesters (poly(éthylène téréphtalate), poly (butylène téréphtalate)), les autres résines polyamides (PA6 ou PA6.6) et les résines fluorées comme le poly(fluorure de vinylidène).
Les copolyamides selon l'invention ayant une composition majoritaire en motifs provenant de L12 ou A12 peuvent être fabriqués selon un procédé habituel continu ou discontinu pour la fabrication du PA12 avec la modification que l'acide A11 est ajouté au mélange de départ. Par exemple, les procédés continus, connus par les brevets européens EP-530 592 et EP-668 309, peuvent être adaptés pour la fabrication des CoPA 12/11. Ainsi, on peut procéder de la façon suivante :

<u>Préparation d'un CoPA 12/11</u>

Dans un autoclave agité, on chauffe une charge formée du mélange de monomères et de 4 à 15% en poids d'eau désionisée par rapport audit mélange, et, le cas échéant d'un plastifiant et/ou au moins un autre additif tel que mentionné auparavant, à une température comprise entre 260°C et 300°C, de préférence entre 275°C et 290°C, dans des conditions de pression autogène, pendant une durée, qui dépend des conditions de température et de pression, de 2 à 5 heures, de préférence de 2h30 à 4 heures, pour réaliser la conversion des monomères (polycondensation), puis on détend le réacteur à température stable pendant 30 à 60 minutes, de préférence pendant 45 à 55 minutes, jusqu'à la pression ambiante et on termine la polymérisation sous un balayage de gaz inerte ou en appliquant un vide pendant 30 à 180 minutes, de préférence pendant 50 à 90 minutes, la durée du palier à haute température et pression pouvant être raccourcie d'une heure dans le cas où l'on utilise l'acide A12, le copolyamide obtenu pouvant être malaxé à l'état fondu avec au moins un additif tel que défini ci-dessus pour obtenir une composition de polyamide.

A l'étape de conversion des monomères, selon la température et la teneur en eau chargée, la pression peut atteindre une valeur comprise entre 15 et 40 bars, se situant, de préférence, entre 25 et 32 bars. Le mélange est maintenu dans ces conditions jusqu'à ce que le taux de L12 non-hydrolysé soit inférieur à 2% en poids, de préférence inférieur à 0,5% en poids, pour assurer la bonne qualité de la résine.

Après l'étape de détente, le copolyamide est obtenu par une vidange de la vanne de fond du réacteur, en refroidissant les joncs dans l'eau et en granulant les joncs.

Le copolyamide est séché à un taux d'humidité généralement inférieur à 0,25% en poids dans des appareillages habituels pour le séchage des granulés. La viscosité inhérente correspond aux critères ci-dessus. Le taux résiduel en L12 est généralement inférieur à 1,0% en poids, de préférence inférieur à 0,5% en poids.

Selon les propriétés particulières souhaitées, la résine peut être reprise par un outil de malaxage habituel, de préférence un malaxeur continu à une ou deux vis, pour y ajouter les additifs cités auparavant, notamment le plastifiant, dans la phase fondue de la résine et les disperser au mieux.

Les copolyamides selon l'invention, ayant une composition majoritaire en motifs provenant de A11 peuvent être fabriqués selon un procédé habituel discontinu pour la fabrication de PA11 avec la modification que l'acide A12 ou le lactame L12 est ajouté au mélange de départ. Ainsi, on peut procéder de la façon suivante :

Préparation d'un CoPA 11/12, le monomère minoritaire étant ajouté sous forme d'acide A12

Dans un autoclave agité, on chauffe une charge formée du mélange de monomères et de 6 à 20% en poids, de préférence de 10 à 16% en poids, d'eau désionisée par rapport audit mélange, et le cas échéant d'un plastifiant et/ou au moins un autre additif tel que mentionné auparavant, à une température comprise entre 220 et 260°C, de préférence entre 230 et 240°C, dans des conditions de pression autogène, pendant une durée de 1h30 à 3h30, de préférence pendant 2h30 après que le mélange ait fondu. On détend le réacteur jusqu'à la pression ambiante pendant une durée d'environ 2 heures, puis on termine la polymérisation à une température comprise entre 240 et 280°C, de préférence entre 250 et 270°C, sous un balayage de gaz inerte ou en appliquant un vide pendant 30 à 180 minutes, de préférence de 50 à 90 minutes, de préférence de 60 à 75 minutes, le copolymère obtenu pouvant être malaxé à l'état fondu avec au moins un additif tel que défini ci-dessus.

Pendant l'étape de conversion des monomères, conduite sous agitation dès que le mélange de départ est fondu, la pression atteint selon la température et la quantité d'eau ajoutée, une valeur comprise entre 7 et 30 bars. Dans le cas où la pression dépasse les 30 bars, on peut l'ajuster par une légère détente du réacteur.

Après la détente, le copolyamide est obtenu par une vidange par la vanne de fond du réacteur, en refroidissant les joncs dans l'eau et en les granulant. La résine séchée correspond aux mêmes critères de teneur de lactame résiduel que ceux décrits auparavant.

Dans tous les cas, les granulés obtenus peuvent être mélangés avec au moins un autre (co)polymère, notamment thermoplastique, dont des exemples ont été donnés ci-dessus.

Préparation d'un CoPA 11/12, le monomère minoritaire étant ajouté sous forme de lactame L12

Dans un autoclave agité, on chauffe une charge formée du mélange de monomères et de 0 à 20% en poids, de préférence de 4 à 10% en poids, d'eau désionisée par rapport audit mélange, et, le cas échéant, d'un plastifiant et/ou au moins un autre additif tel que mentionné auparavant, à une température comprise entre 250 et 300°C, de préférence entre 260 et 285°C, dans des conditions de pression autogène, pendant une durée de 2 à 5 heures, de préférence pendant 2 à 4 heures, après que le mélange ait fondu. Pendant cette étape de conversion des monomères, conduite sous agitation dès que le mélange de départ est fondu, la pression atteint selon la température et la quantité d'eau ajoutée, une valeur comprise entre 15 et 60 bars. Dans le cas où la pression dépasse les 30 bars, il est préférable de l'ajuster par une détente du réacteur à cette pression de 30 bars. On détend le réacteur jusqu'à la pression ambiante pendant une durée d'environ 2 heures, puis on termine la polymérisation à une température comprise entre 240 et 300°C, de préférence entre 270 et 285°C, sous un balayage de gaz inerte ou en appliquant un vide pendant 30 à 180 minutes, de préférence de 50 à 90 minutes, le copolymère obtenu pouvant être malaxé à l'état fondu avec au moins un additif tel que défini ci-dessus.

Après la détente, le copolyamide est obtenu par une vidange par la vanne de fond du réacteur, en refroidissant les joncs dans l'eau et en les granulant. La résine séchée correspond aux mêmes critères de teneur en lactame résiduel que ceux décrits auparavant.

La présente invention porte également sur l'application du copolyamide tel que défini ci-dessus ou de la composition de polyamide telle que définie ci-dessus :

- à l'extrusion de tubes flexibles pour le transport de liquides du type solvants ou carburants, dans le cas d'une composition de copolyamide avec plastifiant ;

- à l'extrusion de tubes rigides pour le transport de liquides, comme le pétrole, des solvants ou de l'eau, en particulier dans des conditions de haute température ;
- aux revêtements de métal conférant des propriétés d'anti-corrosion, appliqués par enduction ou par la technique de trempage dans une poudre liquéfiée de la résine ;
- à l'extrusion de tubes flexibles résistants à des pressions de gaz à des températures élevées (freins à air comprimé) ;
- au moulage d'objets ayant de bonnes résiliences à basse température ;
- à la fabrication d'objets par rotomoulage d'une poudre de copolyamide ou de composition de polyamide
- l'extrusion de tubes très flexibles, le copolyamide selon l'invention étant associé avec une ou des polyoléfines ;
- la coextrusion de tubes, la couche de copolyamide ou de composition de copolyamide étant associée à au moins une autre couche d'une autre résine thermoplastique ;
- l'extrusion de films flexibles ou de plaques rigides.

Les Exemples suivants illustrent la présente invention sans toutefois en limiter la portée.

<u>Exemple 1</u> : <u>Préparation d'un copolyamide 11/12 (95/5)</u>

Dans un autoclave en acier inoxydable de 100 1, agitable, on charge 28,50 kg d'acide 11-amino-undécanoïque, 1,50 kg d'acide 12-amino-dodécanoïque et 7,0 l d'eau. Le mélange est chauffé à 220°C en 80 minutes. Le mélange fondu et agité est gardé à une température comprise entre 220 et 235°C pendant 80 minutes, dans des conditions de pression autogène. La pression atteint 22 bars. Ensuite, le réacteur est détendu à la pression ambiante pendant une durée de 3 heures. On termine la polymérisation en appliquant un léger balayage d'azote et en agitant à 15 tr/min pendant 1h20 min. A la fin, la résine est obtenue sous forme d'un jonc par la vanne du fond du réacteur et en le refroidissant dans l'eau.
Les caractéristiques et propriétés de la résine obtenue sont rapportées dans le Tableau 1 ci-après.

<u>Exemple 2</u> : <u>Préparation d'un copolyamide 11/12 (90/10)</u>

On procède comme à l'Exemple 1, excepté que les chargements en acide 11-amino-undécanoïque et en acide 12-amino-dodécanoïque sont de respectivement 27,00 kg et 3,00 kg.
Les caractéristiques et propriétés de la résine obtenue sont rapportées dans le Tableau 1 ci-après.

<u>Exemple 3</u> : <u>Préparation d'un copolyamide 12/11 (94/6)</u>

Dans un réacteur du type autoclave agité, de 960 l, on charge 280 kg de dodécanlactame, 21 kg d'eau et 18 kg d'acide 11-amino-undécanoïque. Après des purges à l'azote, le mélange fondu est chauffé à 280°C pendant 3h45 min. sous agitation. La pression atteint 30 bars. Ensuite, le réacteur est détendu lentement durant une période de 5 heures. A la fin de la détente, la température est abaissée à 270°C. La polymérisation est menée à sa fin sous un balayage d'azote à 270°C pendant 2 heures. La résine est déchargée par la vanne de fond sous forme de joncs qui sont refroidis à l'eau et découpés.
Les caractéristiques et propriétés de la résine obtenue sont rapportées dans le Tableau 1 ci-après.

<u>Exemple 4</u> : <u>Préparation d'un copolyamide 12/11 (88/12)</u>

On procède comme à l'Exemple 3, excepté que les chargements en dodécanlactame et en acide 11-amino-undécanoïque sont de respectivement 265 kg et 36 kg.
Les caractéristiques et propriétés de la résine obtenue sont rapportées dans le Tableau 1 ci-après.

<u>Exemple 5 (comparatif)</u> : <u>Préparation d'un polyamide 12</u>

On procède comme à l'Exemple 3, excepté que le seul monomère chargé est le dodécanlactame à raison de 300 kg.
Les caractéristiques et propriétés de la résine obtenue sont rapportées dans le Tableau 1 ci-après.

<u>Exemple 6 (comparatif)</u> : <u>Préparation d'un polyamide 11</u>

On procède comme à l'Exemple 1, excepté que le seul monomère chargé est l'acide 11-amino-undécanoïque.
Les caractéristiques et propriétés de la résine obtenue sont rapportées dans le Tableau 1 ci-après.

<u>Exemple 7</u> : <u>Préparation d'un copolyamide 12/11 (88/12) haute viscosité</u>

On procède comme à l'Exemple 4, excepté que la durée de la polycondensation est augmentée à 3 heures.
Les caractéristiques et propriétés de la résine obtenue sont rapportées dans le Tableau 1 ci-après.

<u>Exemple 8</u> : <u>Préparation d'un copolyamide 12/11 (94/6) haute viscosité</u>

On procède comme à l'Exemple 3, excepté que la durée de la polycondensation est augmentée à 3 heures.
Les caractéristiques et propriétés de la résine obtenue sont rapportées dans le Tableau 1 ci-après.

<u>Exemple 9</u> : <u>Préparation d'un polyamide 12 haute viscosité</u>

On procède comme à l'Exemple 5, excepté que la durée de la polycondensation est augmentée à 3 heures.
Les caractéristiques et propriétés de la résine obtenue sont rapportées dans le Tableau 1 ci-après.

TABLEAU 1

| Exemple | Monomères (1) - Rapport en poids | Co(polymère) | | | | | | |
|---|---|---|---|---|---|---|---|---|
| | | Désignation | Viscosité inhérente | Point de fusion (°C) | Résistance au choc entaillé à -40°C (2) ($kJm^{-2}$) | Module de flexion (3) (MPa) | Tests en traction (4) | |
| | | | | | | | Contrainte au seuil (MPa) | Allongement à la rupture (%) |
| 1 | A11/A12 95/5 | CoPA11/12 (95/5) | 1,65 | 187 | 16,5 | 1005 | 32,8 | 226 |
| 2 | A11/A12 90/10 | CoPA11/12 (90/10) | 1,63 | 185 | 16,0 | 966 | 32,3 | 204 |
| 3 | L12/A11 94/6 | CoPA12/11 (94/6) | 1,68 | 174 | 8,6 | 1084 | 38,1 | 254 |
| 4 | L12/A11 88/12 | CoPA12/11 (88/12) | 1,65 | 171 | 8,9 | 959 | 36,9 | 245 |
| 5 (comp.) | L12 | PA 12 | 1,65 | 177 | 7,4 | 1105 | 38,6 | 235 |
| 6 (comp.) | A11 | PA 11 | 1,65 | 189 | 14,0 | 1010 | 40,0 | 280 |
| 7 | L12/A11 88/12 | CoPA12/11 (88/12) haute viscosité | 1,88 | 170 | 9,8 | 1055 | 37,6 | 168 |
| 8 | L12/A11 94/6 | CoPA12/11 (94/6) haute viscosité | 1,87 | 176 | 10,0 | 1117 | 38,9 | 168 |
| 9 (comp.) | L12 | PA12 haute viscosité | 1,88 | 180 | 7,9 | 1134 | 39,6 | 203 |

(1) A11 : Acide 11-amino undécanoïque ; A12 : Acide 12-amino-dodécanoïque ; L12 : Dodécanlactame

(2) Norme ISO 179/93 (3) Norme ISO 178/93 (4) Norme ISO 527-IB.

Les Figures 1 et 2 du dessin annexé représentent respectivement l'évolution du module de flexion (en MPa) en fonction du pourcentage de BBSA ajouté aux (co)polyamides des Exemples 6 (comp.), 4, 5 (comp.) et 3, et l'évolution de la résilience de ces mêmes (co)polyamides en fonction de la température.
La Figure 1 montre que les copolyamides 12/11 sont davantage assouplis par l'ajout de plastifiant. En conséquence, il est possible de réduire la quantité de plastifiant total pour atteindre une flexibilité finale visée.
La Figure 2 montre l'abaissement de la transition ductile/fragile dans le cas des copolyamides 12/11.

Exemples 10 à 17

Les résines des Exemples 3, 4, 5 (comp.) et 6 (comp.) ont été mélangées avec du plastifiant n-butyl-benzène sulfonamide (BBSA) dans les quantités indiquées dans le Tableau 2. (Exemples respectivement 10 à 17).
Les propriétés des différentes résines résultantes sont rapportées dans le Tableau 2.

Exemples 24 (comparatif)

On prépare un mélange par compoundage dans une extrudeuse d'un PA 12 (80,5% en poids)ayant une viscosité inhérente de 1,69 dl/g avec du BBSA (7,5%) et du Lotader 3410 (12%) en tant que modifiant choc. Les propriétés de ce mélange figurent au Tableau 2 bis.

Exemples 25)

Avec le coPA12/11 (94/6) de l'exemple 3 ci-dessus (82 % en poids), on prépare un mélange avec du BBSA (6%) et du Lotader 3410 (12%) en tant que modifiant choc. Les propriétés de ce mélange figurent au Tableau 2 bis.

Exemples 26 (comparatif)

On prépare un mélange d'un PA 12 (80,5% en poids)ayant une viscosité inhérente de 1,36 dl/g avec du BBSA (7,5%) et du Lotader 3410 (12%) en tant que modifiant choc. Les propriétés de ce mélange figurent au Tableau 2 bis.

Exemples 27

Avec du coPA12/11 (94/6) ayant une viscosité inhérente de 1,37 dl/g (82 % en poids), on prépare un mélange avec du BBSA (6%) et du Lotader 3410 (12%) en tant que modifiant choc. Les propriétés de ce mélange figurent au Tableau 2 bis.

TABLEAU 2

| Exemple | Composition du mélange | | Résistance au choc entaillé à -40°C ($kJm^{-2}$) | Module de flexion (MPa) | Tests en traction | |
|---|---|---|---|---|---|---|
| | Résine de l'Exemple | BBSA à raison de | | | Contrainte au seuil (MPa) | Allongement à la rupture (%) |
| 10 | 3 [CoPA12/11 (94/6)] | 7% * | 4,8 | 417 | 27,7 | 244 |
| 11 | 4 [CoPA12/11(88/12)] | 7% | 5,8 | 384 | 26,2 | 276 |
| 12 (comp.) | 5 (comp.) [PA 12] | 7% | 4,8 | 530 | 28,6 | 261 |
| 13 | 3 [CoPA12/11 (94/6)] | 12% | 4,2 | 323 | 24,1 | 285 |
| 14 | 4 [CoPA12/11 (88/12)] | 12% | 4,5 | 301 | 22,5 | 301 |
| 15 (comp.) | 5 (comp.) [PA12] | 12% | 4,1 | 375 | 25,0 | 286 |
| 16 (comp.) | 6 (comp.) [PA11] | 7% | 10,0 | 410 | 30,0 | 296 |
| 17 (comp.) | 6 (comp.) [PA11] | 12% | 4,5 | 300 | 26,8 | 305 |

* les pourcentages de BBSA sont donnés par rapport à la résine

TABLEAU 2 bis

| Exemple | Composition du mélange | | | Résistance au choc entaillé à -40°C ($kJm^{-2}$) | Module de flexion (MPa) |
|---|---|---|---|---|---|
| | Résine | BBSA à raison de | Lotader 3410 (Modifiant choc) | | |
| 24 (comp) | (comp.) [PA 12] viscosité inhérente : 1,69 dl/g | 7,5% | 12% | 11 | 360 |
| 25 | [CoPA12/11 (94/6)] de l'exemple 3 | 6% | 12% | 11 | 360 |
| 26 (comp) | (comp.) [PA 12] viscosité inhérente : 1,36 dl/g | 7,5% | 12% | 3,4 | 350 |
| 27 | [CoPA12/11 (94/6)] viscosité inhérente : 1,37 dl/g | 6% | 12% | 5 | 350 |

* les pourcentages de BBSA et de Lotader 3410 sont donnés par rapport au mélange (100%)

La comparaison des exemples 4 et 5 montre qu'il faut 5% de BBSA en moins pour obtenir un module de flexion et de chocéquivalent entre le coPA12/11 et le PA12 tout en obtenant pour le coPA12/11 une résistance au choc augmentée d'environ 50%.

La ccmparaison des exemples 24 et 25 montre que si on ajoute au polymère ou au copolymère à la fois un plastifiant et modifiant choc, à modules de flexion et résistances au choc identiques, il faut moins de plastifiant avec le coPA12/11 qu'avec le PA12. La comparaison des exemples 26 et 27 montre qu'à modules de flexion et viscosités inhérentes sensiblement identiques, il faut moins de plastifiant avec le coPA12/11. De plus on observe que la résistance au choc est également meilleure pour la composition à base de coPA12/11 que celle de la composition à base de PA12.

Exemples 18 à 23 : Extrusion de tubes

A l'aide des compositions plastifiées des Exemples 10 à 15, on a extrudé des tubes ayant chacun un diamètre extérieur de 8 mm et un diamètre intérieur de 6 mm, sur une extrudeuse Maillefer avec un profil de température de 190 - 200 - 220 - 230 - 230 - 230 - 220 - 210 (températures en °C).

Les résultats des essais conduits sur chacun de ces tubes sont rapportés dans le Tableau 3.

Tableau 3

| Exemple | CoPA plastifié de l'Exemple | Résistance au choc DIN 73378 à -60°C | Résistance au choc « General Motors » à -40°C | Contrainte à l'éclatement à 23°C (MPa) | Contrainte à l'éclatement à 100°C (MPa) | Traction du tube-contrainte à la rupture (MPa) | Flexion SAEJ, force à 50 mm (N) |
|---|---|---|---|---|---|---|---|
| 18 (comp.) | 15 (comp.) | non cassé | 1 cassé sur 5 | 24 | 8,5 | 30,4 | 14 |
| 19 (comp.) | 12 (comp.) | non cassé | non cassé | 30,6 | 10,1 | 36,5 | 18 |
| 20 | 13 | non cassé | non cassé | 25,6 | 8,9 | 29,6 | 14 |
| 21 | 10 | non cassé | non cassé | 30,1 | 9,7 | 34,1 | 17 |
| 22 | 14 | non cassé | 1 cassé sur 5 | 24,4 | 8,2 | 27,9 | 13 |
| 23 | 11 | non cassé | non cassé | 28,5 | 8,7 | 31,4 | 17 |

**Figure 1 -**

PA11 - Exemple 6 (comp)
PA12/11 (88/12) - Exemple 4
PA12 - Exemple 5 (comp)
PA12/11 (94/6) - Exemple 3

**Figure 2 -**

PA12 - Exemple 5 (comp)
PA12/11 (94/6) - Exemple 3
PA12/11 (82/2) - Exemple 4
PA11 - Exemple 6 (comp)

## Revendications

**1.** Copolyamide résultant de la polycondensation d'un mélange :

- de docécanlactame (L12) ou d'acide 12-amino-dodécanoïque (A12) ; et
- d'acide 11-amino-undécanoïque (A11),

caractérisé par le fait que le monomère L12 ou A12 représente 1 à 15% ou 85 à 99% en poids du mélange, les relations suivantes étant vérifiées pour les points de fusion (PF) en fonction de la composition, les motifs provenant du monomère A12 et L12 étant respectivement majoritaires ou minoritaires :

(1) A12 ou L12 majoritaire : PF (°C) ≥ 176-0,567 x (% A11)
(2) A12 ou L12 minoritaire: PF (°C) ≥ 187-0,5 x (% A12 ou L12),

lesdits points de fusion étant déterminés en prenant les pics des signaux des exothermes obtenus en thermoanalyse différentielle avec une vitesse de chauffage de 10°C/minute pour le deuxième passage de chauffe.

**2.** Copolyamide selon la revendication 1, caractérisé par le fait que son point de fusion est compris entre 167,5 et 178°C dans le cas où les motifs provenant du monomère L12 ou A12 sont majoritaires (CoPA 12/11), et entre 179,5 et 190°C dans le cas où les motifs provenant du monomère L12 ou A12 sont minoritaires (CoPA 11/12).

**3.** Copolyamide selon l'une des revendications 1 et 2, caractérisé par le fait que sa viscosité inhérente est comprise entre 1,1 et 2,00.

**4.** Copolyamide selon la revendication 3, caractérisé par le fait que sa viscosité inhérente est comprise entre 1,3 et 2,00, avantageusement entre 1,45 et 2,00.

**5.** Composition de copolyamide obtenue par compoundage d'au moins un copolyamide tel que défini à l'une des revendications 1 à 4 avec au moins un additif choisi parmi les plastifiants ; les modifiants choc ; l'acide phosphorique, phosphoreux ou hydrophosphoreux ou leurs esters ou sels de sodium ou de potassium ou les combinaisons de ces produits ; les colorants ; les pigments ; les azurants ; les anti-oxydants ; les stabilisateurs UV ; les limiteurs de chaîne ; et les charges renforçantes ; et/ou avec au moins un autre (co)polymère.

**6.** Composition de polyamide selon la revendication 5, caractérisée par le fait que les plastifiants sont choisis parmi les dérivés de benzène sulfonamide, les esters d'acides hydroxy-benzoïques, les lactames, les esters ou éthers du tétrahydrofurfuryl alcool et les esters de l'acide citrique ou de l'acide hydroxy-malonique.

**7.** Composition de polyamide selon la revendication 6, caractérisée par le fait que le plastifiant est le n-butyl-benzène sulfonamide (BBSA).

**8.** Composition de polyamide selon l'une des revendications 5 et 7, caractérisée par le fait que la quantité de plastifiant (s) va jusqu'à 15% en poids par rapport au mélange du copolyamide et du (ou des) plastifiants.

**9.** Composition de polyamide selon la revendication 8, caractérisée par le fait que les relations suivantes sont vérifiées pour les points de fusion (PF) en fonction de la composition et de la quantité de plastifiant BBSA ajoutée, les motifs provenant du monomère A12 ou L12 étant respectivement majoritaires ou minoritaires :

A12 ou L12 majoritaire: PF(°C) $\geq$ 176 - 0,567x(%A11) - 0,51x(% BBSA)
A12 ou L12 minoritaire: PF(°C) $\geq$ 187 - 0,5x(%A12 ou L12) - 0,54x(% BBSA),

ces relations s'appliquant pour des taux de comonomère (respectivement A11 et A12 ou L12) et/ou de BBSA allant jusqu'à 15% par rapport au copolyamide.

**10.** Composition selon l'une des revendications 5 à 9, caractérisée par le fait que les autres (co)polymères sont choisis parmi les polyoléfines, les polyesters, les autres résines polyamides et les résines fluorées.

**11.** Composition selon l'une des revendications 5 à 10, caractérisée par le fait que les modifiants choc sont choisis parmi les terpolymères éthylène-(méth)acrylate d'alkyle-anhydride d'acide dicarboxylique insaturé.

**12.** Procédé de fabrication du copolyamide tel que défini à l'une des revendications 1 à 4 ou de la composition telle que définie à l'une des revendications 5 à 11, les motifs provenant du monomère L12 ou A12 étant majoritaires, caractérisé par le fait que, dans un autoclave agité, on chauffe une charge formée du mélange de monomères et de 4 à 15% en poids d'eau désionisée par rapport audit mélange, et le cas échéant, d'un plastifiant et/ou d'au moins un autre additif tel que défini à la revendication 5, à une température comprise entre 260°C et 300°C, dans des conditions de pression autogène, pendant une durée de 2 à 5 heures, puis on détend le réacteur à température stable pendant 30 à 60 minutes, et on termine la polymérisation sous un balayage de gaz inerte ou en appliquant un vide pendant 30 à 180 minutes, la durée du palier à haute température et pression pouvant être raccourcie d'une heure dans le cas où l'on utilise l'acide 12-amino-dodécanoïque (A12), le copolyamide obtenu pouvant être malaxé à l'état fondu avec au moins un additif tel que défini à la revendication 5.

**13.** Procédé de fabrication du copolyamide tel que défini à l'une des revendications 1 à 4 ou de la composition telle que définie à l'une des revendications 5 à 11, les motifs provenant du monomère A11 étant majoritaires et le monomère ajouté étant le monomère A12, caractérisé par le fait que, dans un autoclave agité, on chauffe une charge formée du mélange de monomères et de 6 à 20% en poids d'eau désionisée par rapport audit mélange, et le cas échéant d'un plastifiant et/ou d'au moins un autre additif tel que mentionné à la revendication 5, à une température comprise entre 220 et 260°C, dans des conditions de pression autogène, pendant une durée de 1h30 à 3h30, on détend le réacteur pendant une durée d'environ 2 heures, puis on termine la polymérisation à une température comprise entre 240 et 280°C, sous un balayage de gaz inerte ou en appliquant un vide pendant 30 à 180 minutes, le copolymère obtenu pouvant être malaxé à l'état fondu avec au moins un additif tel que défini à la revendication 5.

**14.** Procédé de fabrication du copolyamide tel que défini à l'une des revendications 1 à 4 ou de la composition telle que définie à l'une des revendications 1 à 4 ou de la composition telle que définie à l'une des revendications 5 à 11, les motifs provenant du monomère A11 étant majoritaires et le monomère ajouté étant le monomère L12, caractérisé par le fait que, dans un autoclave agité, on chauffe une charge formée du mélange de monomères et de 0 à 20% en poids d'eau désionisée par rapport audit mélange, et le cas échéant d'un plastifiant et/ou d'au moins un autre additif tel que mentionné à la revendication 5, à une température comprise entre 250 et 300°C, dans des conditions de pression autogène, pendant une durée de 2 à 5 heures, on détend le réacteur pendant une durée d'environ 2 heures, puis on termine la polymérisation à une température comprise entre 240 et 280°C, sous un balayage de gaz inerte ou en appliquant un vide pendant 30 à 180 minutes, le copolymère obtenu pouvant être malaxé à l'état fondu avec au moins un additif tel que défini à la revendication 5.

**15.** Application du copolyamide tel que défini à l'une des revendications 1 à 4 ou de la composition de copolyamide telle que définie à l'une des revendications 5 à 11 :

- à l'extrusion de tubes flexibles pour le transport de liquides du type solvants ou carburants, dans le cas d'une composition de copolyamide avec plastifiant ;
- à l'extrusion de tubes rigides pour le transport de liquides, en particulier dans des conditions de haute température ;

- aux revêtements de métal conférant des propriétés d'anti-corrosion, appliqués par enduction ou par la technique de trempage dans une poudre liquéfiée de la résine ;
- à l'extrusion de tubes flexibles résistants à des pressions de gaz à des températures élevées ;
- au moulage d'objets ayant de bonnes résiliences à basse température ;
- à la fabrication d'objets par rotomoulage d'une poudre de copolyamide ou de composition de polyamide ;
- l'extrusion de tubes très flexibles, le copolyamide étant associé avec une ou des polyoléfines ;
- la coextrusion de tubes, la couche de copolyamide ou de composition de copolyamide étant associée à au moins une autre couche d'une autre résine thermoplastique ;
- l'extrusion de films flexibles ou de plaques rigides.

Figure 1 - Flexibilité des CoPA

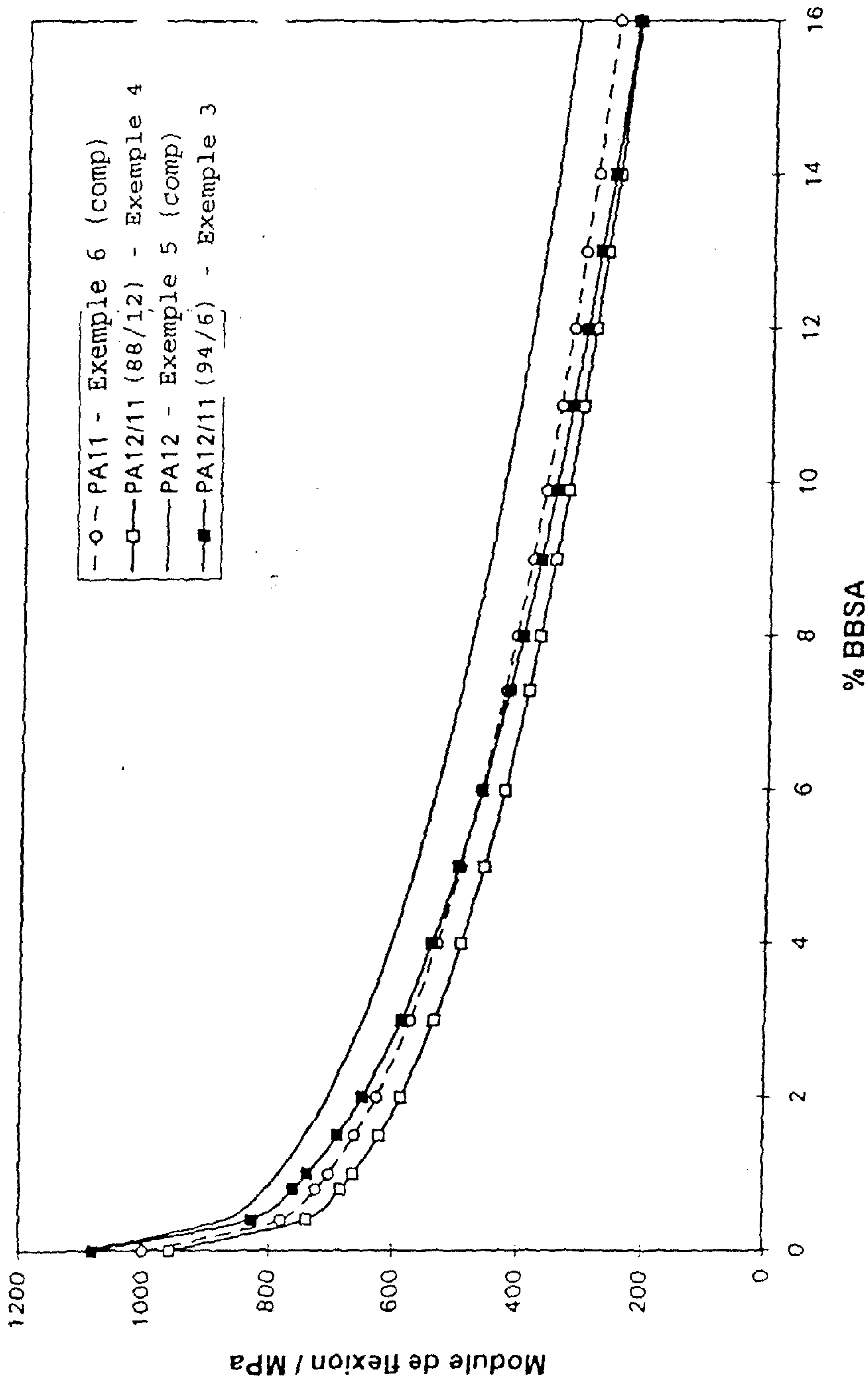

Figure 2 - Résilience en fonction de la température

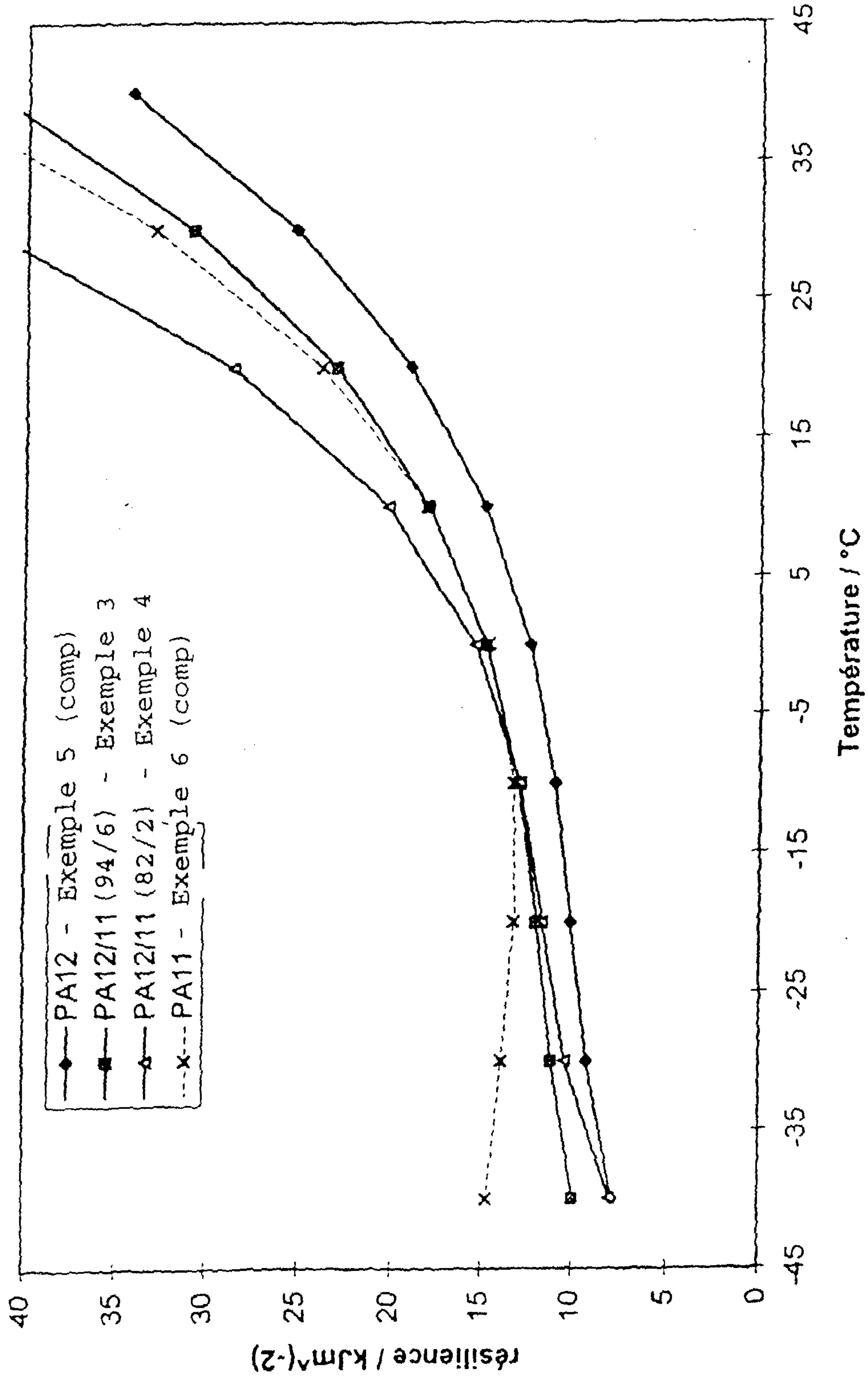

Office européen des brevets

# RAPPORT DE RECHERCHE EUROPEENNE

Numéro de la demande
EP 98 40 2265

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A<br><br>D,A | FR 2 130 737 A (AQUITAINE TOTAL ORGANICO) 10 novembre 1972<br>& DE 21 47 420 C | | C08G69/08<br>C08G69/14 |
| D,A | DATABASE WPI<br>Section Ch, Week 9252<br>Derwent Publications Ltd., London, GB;<br>Class A96, AN 92-428840<br>XP002068723<br>& JP 04 325159 A (TERUMO CORP)<br>* abrégé * | | |
| A | FR 2 044 374 A (AQUITAINE TOTAL ORGANICO) 19 février 1971 | | |
| A | DE 15 95 591 A (BAYER) 14 mai 1970 | | |
| A | DATABASE WPI<br>Section Ch, Week 8534<br>Derwent Publications Ltd., London, GB;<br>Class A23, AN 85-206314<br>XP002068724<br>& JP 60 130104 A (DAICEL HUELS KK)<br>* abrégé * | | **DOMAINES TECHNIQUES RECHERCHES (Int.Cl.6)**<br>C08G |
| A | DATABASE WPI<br>Section Ch, Week 8507<br>Derwent Publications Ltd., London, GB;<br>Class A85, AN 85-041837<br>XP002068725<br>& JP 60 001807 A (DAICEL HUELS KK)<br>* abrégé * | | |

Le présent rapport a été établi pour toutes les revendications

| Lieu de la recherche | Date d'achèvement de la recherche | Examinateur |
|---|---|---|
| LA HAYE | 6 novembre 1998 | Leroy, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.** EP 98 40 2265

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-11-1998

| Document brevet cité au rapport de recherche | Date de publication | Membre(s) de la famille de brevet(s) | Date de publication |
|---|---|---|---|
| FR 2130737 A | 10-11-1972 | DE 2147420 A | 23-03-1972 |
| FR 2044374 A | 19-02-1971 | AUCUN | |
| DE 1595591 A | 14-05-1970 | AUCUN | |

EPO FORM P0460

Pour tout renseignement concernant cette annexe : voir Journal Officiel de l'Office européen des brevets, No.12/82